# EUROPEAN PATENT APPLICATION

(11) **EP 4 823 058 A1**
(43) Date of publication of application: **14.10.2026**
(21) Application number: 26171632.8
(22) Date of filing: 10.04.2026
(51) Int. Cl.: H04L 47/36, H04L 47/43, H04L 47/52, H04L 47/125

(54) **CONGESTION AWARE MULTI-PATHING FOR NETWORK COLLECTIVE COMMUNICATION (NCC)**

(30) Priority: 11.04.2025 US 202519177161
(71) Applicant: Google LLC, Mountain View, CA 94043 (US)
(72) Inventor: Cho, Inho, Santa Clara, California, 95054 (US); Kumar, Praveen, Mountain View, California, 94043 (US); Wassel, Hassan Mohamed Gamal Hassann, Mountain View, California, 94043 (US); Singhvi, Arjun, Mountain View, California, 94043 (US)
(74) Representative: Betten & Resch

(57) **Abstract**

A system providing congestion aware communications in a collective communication networking environment includes receiving a message for communication from a sender to a receiver, the message comprising a chunk of data having a first amount of data. A slicer divides the chunk of data into smaller portions of data, or quanta. For each quanta, a scheduler module iteratively checks each of a plurality of queue pairs, a queue pair representing a dedicated communication pathway between the sender and receiver. Each QP is checked for a number of outstanding bytes associated with the QP. A QP is selected, the selected QP having the minimum number of outstanding bytes among the plurality of queue pairs. The quanta are scheduled for sending on the selected QP. The outstanding bytes associated with a QP, provides an estimate of the level of congestion experienced by the QP. A quanta may be configured to contain 64 KB.

## Description

### BACKGROUND

Most commodity switches off the shelf randomly forward inter- top of rack (ToR) traffic from downlink to one of the uplinks using equal cost multi-path (ECMP). However, relying on the hashing of ECMP, some network links may experience congestion while there is another link not fully utilized. This may be referred to as "flow collision". This results in inefficiencies in bandwidth under stressful workloads such as Machine Learning (ML) training.

Common technologies to add more entropy in terms of network path include creating multiple paths between two end points and distributing the load across them. common network communication collective libraries, a "Round-Robin" (RR) scheme schedules a whole message into each network connection one by one in a round-robin way, and the "Split" scheme evenly divides a message and schedules the same amount of load to all network connections. Even though those naive multipathing schemes improve bandwidth by utilizing more top of rack (ToR) uplinks with increased path entropy, they cannot avoid high tail latency due to increased queueing delay for a congested link with flow collision because existing multipathing approaches do not consider paths' congestion status when making scheduling decisions.

### SUMMARY

The technology is generally directed to a system providing congestion aware communications in a collective communication networking environment. The system is configured to receive a message for communication from a sender to a receiver, the message comprising a chunk of data having a first amount of data. A slicer divides the chunk of data into smaller portions of data, or quanta. For each quanta, a scheduler module iteratively checks each of a plurality of queue pairs (QPs) or network connection, a QP representing a dedicated communication pathway between the sender and receiver in a remote direct access memory (RDMA) over converged ethernet (RoCEv2) environment. Each network connection is checked for a value of the number of outstanding bytes associated with the network connection. A network connection is selected, the selected network connection having the minimum number of outstanding bytes among the plurality of network connections. The quanta are scheduled for sending on the selected network connection. The outstanding bytes associated with a network connection provides an estimate of the level of congestion experienced by the network connection. A quanta is configured to contain 64 KB for RoCEv2 and 512 KB for TCP by default.

The outstanding byte value associated with a network connection is maintained through an accounting process. When the network connection issues a send command including one or more quanta, the number of bytes in the send command are added to the current outstanding byte balance. When the send operation is received at the receiver, the receiver will accept the data and send an acknowledgement back to the sender. Upon receiving an acknowledgement for a send operation, the data contained in the acknowledged transmission is subtracted back from the outstanding bytes on the originating network connection.

The process of scheduling a quanta to a selected network connection involves, for each quanta, iteratively checking the outstanding byte value of each available network connection to find the network connection having the least number of outstanding bytes. To reduce latency caused by the search, the iterative checking can be stopped upon determining that a given network connection has zero outstanding bytes. In this case, the quanta can be immediately scheduled on the network connection, and the iterative checking can be halted. The process then moves to the next quanta for scheduling.

In some aspects of the technology with RoCEv2 transport, to track the status of communications the sender will include the message ID provided by the receiver in its clear to send (CTS) message in the write command issued to the receiver. The write command can include an immediate value that notifies the receiver when the sender has written a new portion of data. A write command with an immediate value writes the data to the receiver. At that point, the receiver may not be aware that the data has arrived. The immediate value provides a wake signal to the receiver to inform the receiver that data has arrived. The immediate value can be a 32 bit value that includes information enabling the receiver to determine the status of a message communication. The immediate value may be configured to include the number of QPs that will be used to transmit the entire message. Additionally, the immediate value may include the size of the data chunk in the original message. This, in combination with the message ID, allows the receiver to map a received communication to the message context for the overarching message containing the transmitted data. Providing a 3 bit indicator for the number of QPs will establish a number of QPs being used for delivering a chunk of 8 maximum QPs.

At the sender, when the acknowledgement is received for a transmitted one or more quanta, the sender maps the quanta back to the QP that originated the transmission. Once identified, the originating QP's outstanding byte balance is reduced to reflect the completed transmission.

According to some aspects of the described technology, a method for transmitting data in a multi-path system between graphic processing units includes receiving a first amount of data to be transmitted as a message from a sender to a receiver. A slicer divides the first amount of data into a number of quanta, each containing a second amount of data that is smaller than the first amount of data. For each quanta, a scheduler module estimates an amount of congestion on each of a plurality of queue pairs or other network connection. A queue pair or network connection is selected based on the estimated congestion on the selected queue pair or network connection, where the estimated congestion on the selected queue pair is determined by a minimum estimate from all of the queue pairs in the plurality of queue pairs to identify the queue pair having the least congestion. The estimate of congestion may be based on an outstanding byte count on the queue pair or network connection. When sending a quanta from the selected queue pair, the estimate for the congestion on the queue pair is increased. When an acknowledgement is received from the sender, the originating queue pair is identified, and the congestion estimate on the originating queue pair is adjusted.

According to other aspects of the described technology, a method for estimating congestion on a queue pair between a sender and a receiver for collective communications between graphic processing units. A message having a first amount of data is received at the sender. The first amount of data is divided into a number of quanta each containing a smaller second amount of data. The quanta are scheduled for transmission on a selected queue pair. When the queue pair sends the scheduled quanta, an outstanding byte value associated with the queue pair is increased. When the sender receives an acknowledgement that the quanta was successfully received at the receiver, the byte count of the acknowledged quanta is subtracted from the outstanding byte value associated with the originating queue pair. The selection of the queue pair may be based on the outstanding byte value of each available queue pair, wherein a queue pair having the lowest outstanding byte value is selected.

### BRIEF DESCRIPTION OF THE DRAWINGS

FIG. 1 is an entity flow diagram showing data communication over a network connection according to aspects of the described technology.
FIG. 2 is a block diagram of a sending node using congestion aware scheduling according to aspects of the described technology.
FIG. 3 is a block diagram illustrating accounting for an outstanding byte value for a network connection according to aspects of the described technology.
FIG. 4 is a block diagram illustrating the sender node providing information regarding a data message to a receiver node.
FIG. 5 is a process flow diagram for a method of multi-path network communications using congestion aware scheduling of network connections according to certain aspects of the described technology.
FIG. 6 is a block diagram of a system for implementing congestion aware scheduling for network connections according to aspects of the disclosed technology.

### DETAILED DESCRIPTION

The technology provides a congestion-aware multipathing solution in collective communications to achieve higher throughput and lower latency with better load balancing. Methods and systems implementing the technology can be configured in network connections using any protocol, including but not limited to transfer control protocol (TCP) and user datagram protocol (UDP) using Remote Direct Memory Access (RDMA) over Converged Ethernet (RoCEv2). TCP provides for transfer between computers on a network by initially establishing a formal connection through a handshake process. In contrast UDP does not establish a formalized connection between computers and allows a sender computer to send data to a receiver computer via connections referred to as queue pairs (QPs). In the description that follows, these implementations are used interchangeably. Where the use of the term QP is used, the example can be implemented in RoCEv2, while examples using the term connection, or network connection can be implemented in TCP, RoCEv2 or any other applicable protocol. It will be understood that the scope of the technology is not limited to these examples and can be applied to any data transfer protocol for inter-computer communication currently developed or developed in the future. The described technology will be described in any particular implementation to provide a better understanding of the technology, but it will be understood the technology can be applied in other implementations as well.

Collective communications applications such as NVIDIA^{®} Collective Communication Library (NCCL), provide multi-graphic processing unit (GPU) and multi-node communication primitives optimized for GPU processing and networking. In general, collective communications describes communication patterns in which a group of processes or nodes participate in the coordinated exchange of data or perform a shared operation as found in computer networking. Collective communications can be used to move data across a distributed or parallel computer network. For instance, to enable communication between multi-GPU, there is typically a sender GPU and a receiver GPU. The sender and receiver are connected through a communication link known as a queue pair (QP). The QP acts as a dedicated channel for data transfer between the sender and the receiver. There may be more than one QP established between the sender and the receiver, and data transfer rates may vary between QPs depending on environmental or hardware variations.

Collective communications may not intrinsically provide channel congestion metrics. For this reason, conventional techniques for scheduling and transmitting data on a QP select the QP to be used for communication using a round robin (RR) or split approach. In RR, each QP is used sequentially across all available QPs. In a split approach, the data to be sent is divided equally across all QPs. In either case, the selection of a QP does not take specific channel characteristics into account.

While specific information about congestion on a QP is not known, the described technology makes informed estimates regarding the health of a QP connection to provide meaningful selection of QPs for data transmission. By looking at each QP and determining the number of scheduled yet unsent bytes remaining in a number of QPs, a QP having the smallest number of outstanding bytes may be assumed to be experiencing the greatest data throughput. In contrast, QPs having higher numbers of outstanding bytes may be presumed to be experiencing slow data rates, causing queued bytes to accumulate.

Methods to provide congestion aware scheduling in a collective communication application can be achieved in three basic actions. First, incoming data messages are sliced into smaller amounts of data by a slicer module. Second, in a scheduler module, a QP is selected from a group of QPs based on the estimated data throughput of the selected QP. Finally, the current backlog of data scheduled but not sent from each QP is maintained through an accounting of the bytes of data scheduled to the QP and the number of bytes that are acknowledged as being received at the receiver.

When the collective communication application receives a chunk of data to be sent from the sender to a receiver, the chunk of data is sliced into a group of smaller chunks of data or quanta. Accordingly, the overall message is being sent in smaller amounts of data that can be spread across multiple QPs. In this way portions of the overall message can be communicated in parallel across different QPs. By way of example, if the collective communication application receives an initial chunk containing up to 1 megabytes (MB) of data, the collective communication application slices the initial chunk into smaller quanta. In some cases, the default size of a quanta for RoCEv2 can be 64 kilobytes (KB) of data, while a quanta in a TCP implementation may be 512 KB. By way of non-limiting example, an initial chunk of data in RoCEv2 containing 128 KB of data would be sliced into two quanta containing 64 KB each.

The smaller quanta are scheduled one-by-one and assigned to an available QP or the established network connection. For each available QP the number of outstanding bytes on that QP are recorded and compared to the other available QPs. The QP having the smallest number of outstanding bytes is selected and the current quanta is scheduled to the selected QP. Once all quanta have been scheduled, it is possible that more than one quanta have been scheduled on the same QP. In this case, all quanta scheduled on the QP are sent using a single remote direct memory access (RDMA) operation. This coalescing of quanta transmission creates fewer transmissions and requires fewer acknowledgements between the sender and receiver.

An ongoing accounting for the outstanding byte value of each QP is maintained. Each QP is continually monitored for its transmissions and subsequent acknowledgements indicating the transmitted data is received. Each time a QP sends out an RDMA operation, the number of bytes in the operation are added to the outstanding byte value for that QP. Similarly, when the RDMA operation is completed, the number of bytes in the RDMA operation are deducted back from the QP's outstanding byte balance.

To carry out selective QP assignments based on congestion estimates, certain factors are considered and addressed. For example, at the receiver, a mapping is performed mapping an RDMA operation completion to the request context associated with the transmit request that spawned the RDMA operation. In order for the receiver to process the completion polled from the shared completion queue, the receiver maps the completion to the correct request context to update the request's progress and notify to the collective communication core when the receiver receives all the data from sender. With RR and split mode, the receiver knows from which QP the completion will arrive. For example, the next QP for RR or all the QPs for split. Therefore, the receiver embeds the message ID required for indexing request context into the work request ID contained in receive requests when posting them. The QP is selected dynamically according to the estimated congestion on the QP path, meaning the receiver does not anticipate from which QP the completion will arrive. To make the receiver capable of mapping a completion to the correct request context, the receiver advertises the message ID in a clear-to-send message (CTS), and the sender echoes back the message ID through the immediate value in WRITE_WITH_IMMEDIATE operation that is followed by a WRITE operation. The WRITE_WITH_IMMEDIATE operation is a typical write operation with the additional functionality that when the data is written, the receiver is not aware that the data has arrived. The immediate value wakes up the receiver and notifies the receiver that new data has arrived. Once the receiver polls the completion, using the message ID contained in the immediate value it maps the completion to the correct request context.

Dynamic QP scheduling also adds some ambiguity as to when the end of a complete message is received at the receiver. A varying number of QPs may be scheduled to send the message. Accordingly, the receiver does not know how many QPs will be sending data from a given message. In RR and split mode, the receiver knows how many completions it has to poll to complete the message. On the contrary, in dynamic QP scheduling, the receiver does not know how many completions it has to expect to conclude the end of message. The number of QPs can vary between 1 and 4 or all QPs. To let the receiver know how many completions it should expect, the number of QPs that are being used for data transmission is included in the immediate value. When processing the first completion for a message, the receiver can pick up this value contained in the immediate value and update the request context to include the number of completions it has to process to conclude the end of message.

The immediate value may be altered for congestion aware communications in the following way. To include message ID, the number of QP used, and the message size used for baseline collective communication implementations, an example solution utilizes a 32-bit immediate value as follows: The number of QPs used can be stored in a set of one or more bits, such as bits 29-31. Thus, the number of QPs used for data transmission is represented in 3-bit space. Accordingly, this value can support up to 8 QPs or binary values 000 - 111.

The message ID can be stored in another set of one or more bits, such as bits 21-28. The message ID is used to map the completion to the proper request context at the receiver. With 8-bit space, it can support up to 256 message IDs, which is the maximum number of requests that, for example, a NCCL communicator can allocate.

Total chunk or message size can be stored in another set of bits, such as bits 0-20. This represents the total data size for this message. With 21-bit space, the immediate value can support message sizes up to 2 MB. With 128-byte aligned chunk sizes as specified by the LL128 protocol, 21 bits can support up to 512 MB.

Additional measures may be included to further reduce latency of transmission of quanta. For example, one additional measure is to use cacheline alignment. In an example embodiment, when making a scheduling decision on which QP to select for scheduling a quanta, the scheduler module looks up all outstanding bytes values for all QPs or network connections. In order to minimize latency for quanta scheduling, the maximum number of QPs is limited to 8. In this way the lookup values are normalized to 64 bytes. Paddings are added to all lookup values such that when included with the identifier for the corresponding QP, the 64 Bytes (8 QPs * 8 bytes outstanding bytes counter) are cacheline aligned for faster cache searching.

A second additional measure is caching a QP index. Because a single network communicator instance uses a shared completion queue for resource efficiency, when the scheduler module is notified of completion on the shared completion queue, it maps completion back to the QP that was used for transmission to insure accurate outstanding bytes accounting. In normal cases, a linear search of all QPs is required to find the QPs matching QP number, which takes up to O(8) = the maximum number of QPs. To optimize the QP number scanning latency, the QP index is cached when the QP that was used to transmit quanta was the single QP used for a chunk, such as when all the quanta are scheduled to one QP.

Another additional measure provides for a scheduling fast path. In order to make a scheduling decision, it ordinarily will require up to O(8) iterations for scanning outstanding bytes for each QP. As a latency optimization, especially for a small message size, when the scheduler encounters a QP having zero outstanding bytes during its scanning of all QP's outstanding bytes, the scheduler module immediately schedules a quanta to the QP and stops scanning further. It may be deduced that a QP with zero outstanding bytes would logically be found to be the lowest outstanding byte value.

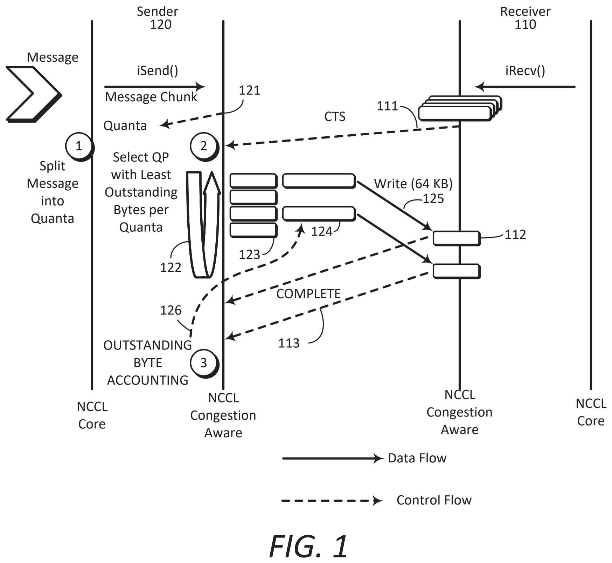

Referring now to FIG. 1, an entity diagram showing congestion aware collective communication is shown. The example of FIG. 1 is illustrated through an implementation in NCCL, but the described technology is not limited to this implementation and could be implemented in other collective communication application. Control and data flows are defined between a core NCCL and a NCCL congestion aware scheduling entity, which could be by way of example, a software module serving as a plug-in application to the NCCL core. The core and the plug-in are installed on the receiver device 120 and the receiver device 110.

A network communication occurs between a sender 120 and a receiver 110. The sender 120 and receiver 110 may be any entity in a network that can communicate data and store or process the data. For example, the sender 120 and receiver 110 may be a computer device, or a processor such as a GPU or TPU. When a data transfer is to be performed, the receiver 110 sends a "clear-to-send" message 111 to the sender 120. The NCCL core at the sender 120 generates an iSend() command associated with a chunk of data having a first data size and representing the message as a whole. The congestion aware scheduler module splits 121 the data chunk into a number of smaller units of data as quanta. According to one example, the default size of a quanta can be 64 KB, while the data chunk for the entire message can be up to 1 MB of data. The quanta are sent from sender 120 via a selected QP providing a dedicated communication channel between sender 120 and receiver 110.

To provide congestion aware communication, each quanta is scheduled on a selected QP 123, which is determined to have the lowest amount of congestion 122 between sender 120 and receiver 110. QPs can experience latency, due to a number of factors, including routing distance between sender 120 and receiver, hardware variations, or environmental factors. Collective communications typically do not employ mechanisms for monitoring and reporting congestion, so the congestion aware scheduler module estimates QP congestion levels by considering the number of outstanding bytes presently scheduled on the QP. The number of outstanding bytes represents the number of bytes of data that have been sent from the sender on the QP, but have not been acknowledged by the sender 110. The number of outstanding bytes is affected by the round trip time for a communication transmitted via the QP.

For each quanta, the congestion aware scheduler module iteratively checks each available QP 123 to determine the current number of outstanding bytes associated with that QP. Once all QPs have been checked, the QP having the minimum number of outstanding bytes is selected 124 for sending the quanta. The QP selection process is performed for each quanta making up the original message.

Referring to FIG. 1, the first and third QP are selected for sending quanta. The sender 120 provides a write command 125 to send the quanta (e.g., 64 KB). When the data is received at the receiver 110 the receiver receives the sent data 112 representing one or more quanta. The received quanta may represent all or just a portion of the original message. Because the message is being dynamically scheduled on QPs that are selected based on current congestion estimates, the receiver does not have knowledge *a priori* regarding which QP(s) will be sending the message. To address this uncertainty, sender 120 provides a write command 125 including an immediate value that alerts the receiver 110 when new data arrives. The immediate value can be, for example, a 32 bit message that contains information identifying the number of QPs that will be providing the whole message, the message ID originally provided in the CTS command 111, and a value indicating the size of the entire message. Through the immediate value, the receiver 110 can identify the message associated with the received data 112 and correlate the received data 112 with the appropriate message context at the receiver 120. To allow the receiver 110 to determine when the entire message is received, the number of QPs used for sending the message is included. When the receiver 110 polls receipt of data from a number of QPs indicated in the immediate value, the receiver 110 will poll the transmission as complete and provide acknowledgement 113 of the completed message to sender 120.

As quanta are received 112 and completed 113, the congestion aware scheduler module maps the acknowledged quanta back to its originating QP 124. When the quanta for the selected QP 124 is received, the outstanding bytes for that QP are adjusted to account 126 for the received quanta. The number of outstanding bytes represent the current number of bytes that have been sent from the QP, but have yet to be acknowledged as received. This value is maintained throughout the lifecycle of the QP within the current communication session. To maintain the current outstanding byte value, the outstanding byte value is increased by the number of bytes in each write command 125 issued by the sender 120. When an acknowledgement 113 is received and mapped back to its originating QP, the outstanding byte value for that QP is adjusted by deducting the number of bytes in the acknowledged receipt. The number of outstanding bytes may be viewed as indicative of the quality of the connection as the outstanding bytes will decrease when the round trip time of each transmission is reduced, and the acknowledgments are received in shorter time.

To determine the QP having the lowest outstanding byte value, each QP is iteratively checked to compare outstanding byte values of all available QPs 123. This is performed for each quanta sliced from the original message chunk. To decrease latency in the collective communication, while iteratively checking through the available QPs, if a QP is found which has zero outstanding bytes, it may be assumed that this QP will be determined to have the lowest number of outstanding bytes. Accordingly, the search through all QPs can be halted, and the quanta immediately assigned to the QP having zero outstanding bytes.

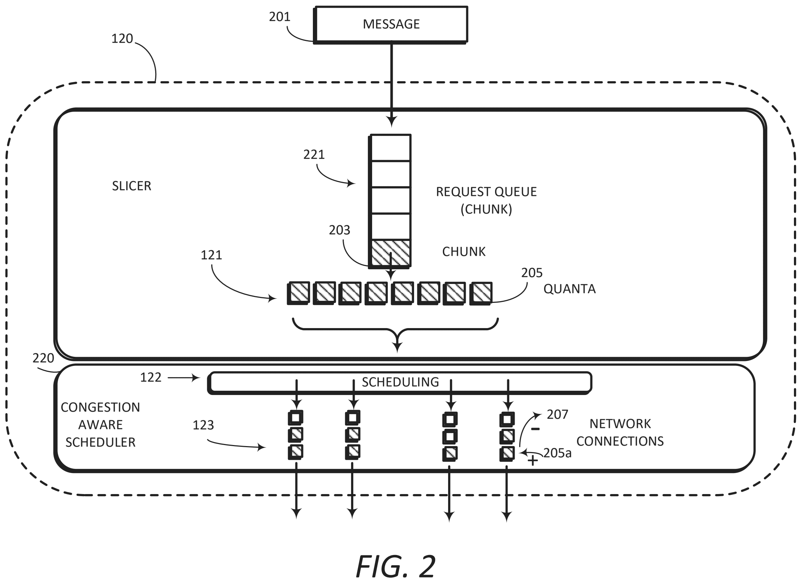

FIG. 2 provides a diagram for scheduling collective communications according to aspects of the described technology. At a sender 120, a message 201 is identified to be sent to a receiver. Message 201 contains a chunk of data having a first size 203. For example, the message may include up to 2MB of data. Upon issuance of a send() command, the message request is queued in the request queue 221. When a message 203 is ready to be processed from the request queue 221, the message 205 is sliced into smaller chunks of data defining quanta 205. Each quanta 205 will be scheduled for sending on a network connection 123 connecting the sender 120 to a receiver. To schedule each quanta 205 on a network connection experiencing the least amount of congestion, the scheduler module 220 performs a network connection selection process 122 by iteratively checking each available network connection or network connection 123 to determine the number of outstanding bytes currently residing on each connection or network connection. The current quanta 205 is scheduled to the selected network connection 205a for sending to the receiver. The network connection is monitored, and the number of outstanding bytes is accounted for to associate an outstanding byte value with the network connection. As quanta are sent from the network connection 205a, the outstanding byte value is increased, while when a sent quanta is acknowledged back from the receiver, the originating network connection is determined, and the outstanding byte value of the network connection is decreased to account for the completed transmission 207.

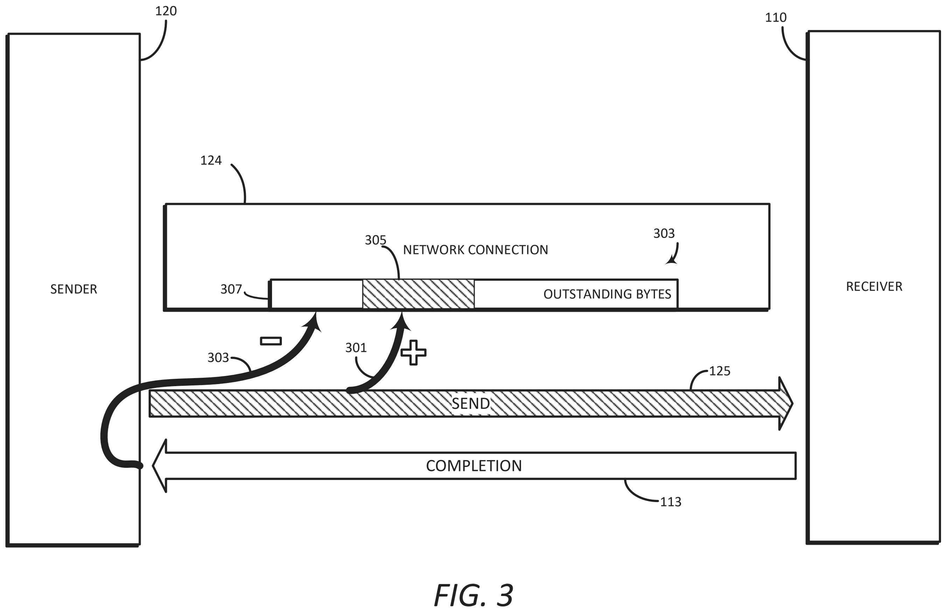

FIG. 3 provides an illustration of the accounting for an outstanding byte value of a queue pair or another connection according to aspects of the described technology. As communications occur between sender 120 and receiver 110, the sender 120 issues a write operation 125 containing one or more quanta to be written to receiver 110. When the write operation 125 is issued and the quanta are sent, the number of bytes in the write command is added 301 to the outstanding byte value 303 of the network connection 124 providing the communication. When the receiver receives the data 110, the receiver 110 sends an acknowledgement 113 to the sender 120. The sender 120 identifies the network connection 124 that originated the communication, and subtracts 303 the acknowledged bytes from the outstanding bytes 303 for the network connection 124. The outstanding bytes value 305 represents data bytes that have been sent from network connection 124, but have not yet been acknowledged. In effect, the outstanding bytes value 305 is related to the round trip time of a communication from sender 120 to receiver 110 and back from receiver 110 to sender 120. The round trip time is affected by the congestion on the network connection. Therefore, less congestion will result in a lower outstanding byte value 305 than the same channel experiencing increased congestion and lower data throughput.

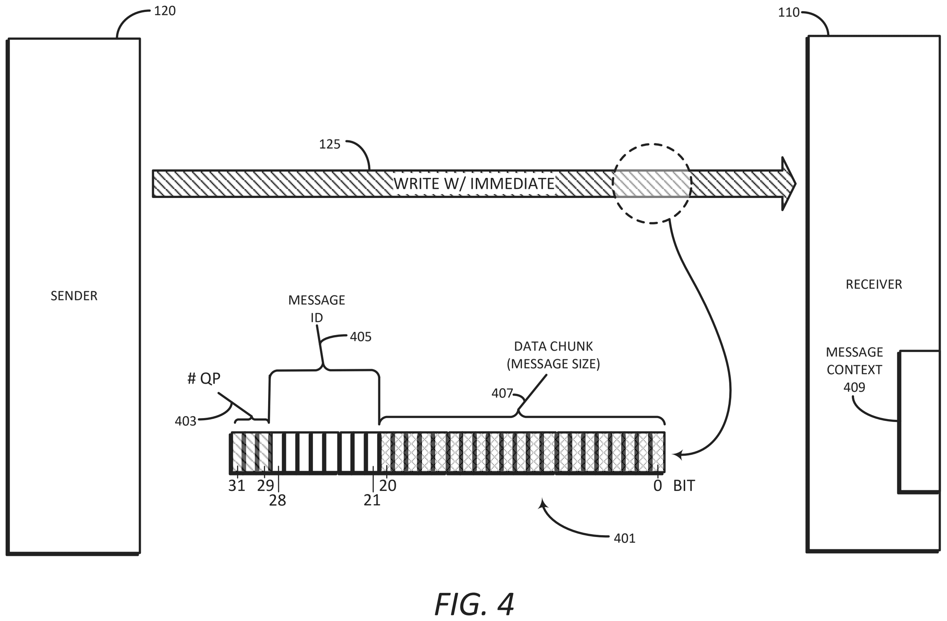

FIG. 4 is an illustration of messaging provided to a receiver 110 for congestion aware collective communications according to aspects of the described technology. When a communication is scheduled at sender 120, sender 120 issues a write operation including an immediate value 125. The immediate value 125 provides the receiver 110 with notification that a message has been sent. In order to keep track of the status of messages received, the receiver 110 identifies when the end of the message has been confirmed as well as which message the communication represents. In congestion aware collective communication, the QP communication channels are dynamically selected to send data using communication channels experiencing the least congestion as indicated by the number of outstanding bytes for the selected QP. Furthermore, the message is sliced into smaller transmission units. Because of this, the receiver is provided with information to predict the expected message corresponding to the data being received. The receiver 110 typically tracks the progress of messages through a message context 409 linked to the message ID. In RR and split techniques, the QP providing the message is predictable, as the message is received in its original format. To overcome the loss of this predictability, the immediate value in the write command 125 is configured to provide context to the receiver 110.

The immediate value 401 can be configured as a 32 bit identifier including bits 0 - 31. In a first section containing 21 bits 0 - 20, the overall size of the complete message is provided. Next, bits 21 - 28 provide 8 bits containing the message ID, which was originally provided by the receiver 110 when the clear to send was issued to the sender 120. Finally, bits 29 - 31 contain a three bit value indicating the number of QPs that will be carrying the overall message. This information provides enough identifying information to allow the receiver to map the transmission to its proper message context 409. This will allow the receiver 110 to accurately track received messages and poll the transmissions as complete when all quanta from an original message are received. The sender is notified when the data transfer is complete.

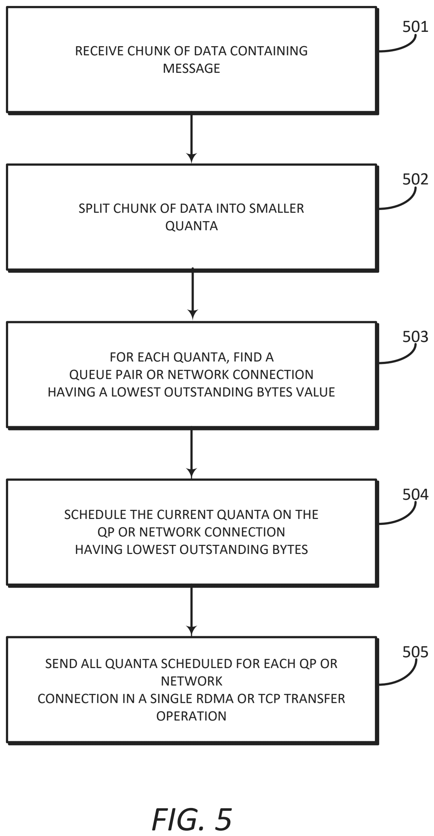

FIG. 5 is a process flow diagram for providing congestion aware collective communications according to aspects of the described technology. At a sender, a chunk of data containing a message to be sent is received at block 501. The chunk of data is then sliced into a number of smaller data units or quanta at block 502. After splitting into quanta, for each quanta, a queue pair or network connection is identified having the smallest number of outstanding bytes at block 503. The QP or network connection having the lowest number of outstanding bytes is representative of the communication channel experiencing the least amount of congestion. The quanta are scheduled for sending on the selected QP or network connection having the lowest number of outstanding bytes at block 504. When all quanta have been scheduled, there may be more than one quanta scheduled on any given QP or network connection. In those instances, the QP or network connection will send all scheduled quanta in a single RDMA operation. More generally, all quanta scheduled for each QP or network connection are sent in a coalesced RDMA operation or TCP transfer in block 505.

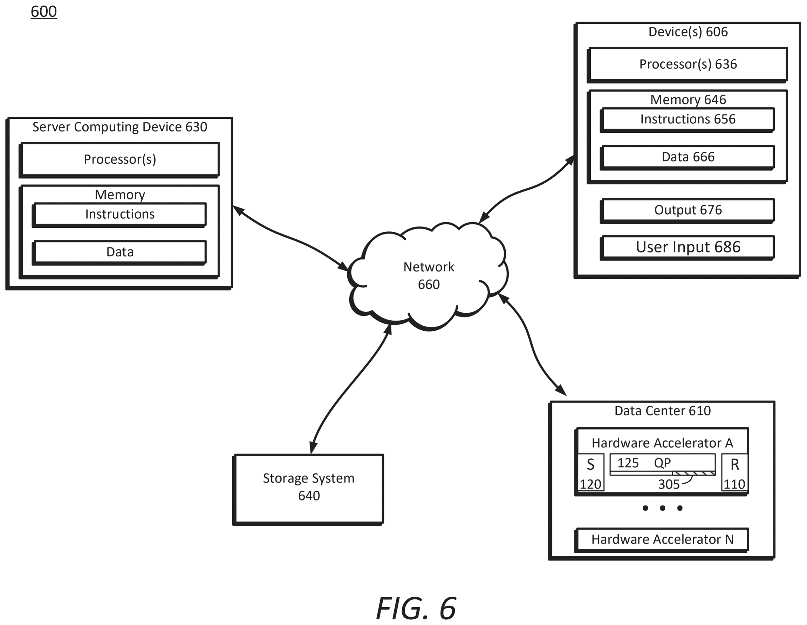

FIG. 6 illustrates an example system 600 in which the features described above may be implemented. It should not be considered limiting the scope of the disclosure or usefulness of the features described herein. In this example, system 600 may include device(s) 606, server computing device 630, storage system 640, and network 660.

Each device 606 may be a personal computing device intended for use by a respective user. The device 606 may include one or more processors 636, memory 646, data 666 and instructions 656. Each device 606 may also include an output 676, user input 686, and location sensor 696. By way of example only, devices 606 may be mobile phones or devices such as a wireless-enabled PDA, smartphones, a tablet PC, a wearable computing device (e.g., a smartwatch, AR/VR headset, smart helmet, etc.), a netbook that is capable of obtaining information via the Internet or other networks, or a smart home device, such as a home assistant, smart thermostat, smart doorbell, smart light, etc.

Memory 646 of device 606 may store information that is accessible by processor 636. Memory 646 may also include data that can be retrieved, manipulated or stored by the processor 636. The memory 646 may be of any non-transitory type capable of storing information accessible by the processor 636, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. Memory 646 may store information that is accessible by the processors 636, including instructions 656 that may be executed by processors 636, and data 666.

Data 666 may be retrieved, stored or modified by processors 636 in accordance with instructions 656. For instance, although the present disclosure is not limited by a particular data structure, the data 666 may be stored in computer registers, in a relational database as a table having a plurality of different fields and records, XML documents, or flat files. The data 666 may also be formatted in a computer-readable format such as, but not limited to, binary values, ASCII or Unicode. By further way of example only, the data 666 may comprise information sufficient to identify the relevant information, such as numbers, descriptive text, proprietary codes, pointers, references to data stored in other memories (including other network locations) or information that is used by a function to calculate the relevant data.

The instructions 656 can be any set of instructions to be executed directly, such as machine code, or indirectly, such as scripts, by the processor 636. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

The one or more processors 636 may include any conventional processors, such as a commercially available CPU or microprocessor. Alternatively, the processor can be a dedicated component such as an ASIC or other hardware-based processor. Although not necessary, computing devices 606 may include specialized hardware components to perform specific computing functions faster or more efficiently.

Although Figure 6 functionally illustrates the processor, memory, and other elements of devices 606 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the devices 606. Accordingly, references to a processor or device will be understood to include references to a collection of processors, devices, or memories that may or may not operate in parallel.

Output 676 may be a display, such as a monitor having a screen, a touchscreen, a projector, or a television. The display 676 of the one or more computing devices 606 may electronically display information to a user via a graphical user interface ("GUI") or other types of user interfaces. For example, as will be discussed below, display 676 may electronically display query results.

The user input 686 may be a mouse, keyboard, touch-screen, microphone, or any other type of input.

The devices 606 can be at various nodes of a network 660 and capable of directly and indirectly communicating with other nodes of network 660. Although one device is depicted in Figure 6, it should be appreciated that a typical system can include one or more devices, with each device being at a different node of network 660. The network 660 and intervening nodes described herein can be interconnected using various protocols and systems, such that the network can be part of the Internet, World Wide Web, specific intranets, wide area networks, or local networks. The network 660 can utilize standard communications protocols, such as WiFi, Bluetooth, 4G, 5G, etc., that are proprietary to one or more companies. Although certain advantages are obtained when information is transmitted or received as noted above, other aspects of the subject matter described herein are not limited to any particular manner of transmission.

In one example, system 600 may include one or more server computing devices 630 having a plurality of computing devices, e.g., a load balanced server farm, that exchange information with different nodes of a network for the purpose of receiving, processing and transmitting the data to and from other computing devices. For instance, one or more server computing devices 630 may be a web server that is capable of communicating with the one or more client computing devices 606 via the network 660. In addition, server computing device 630 may use network 660 to transmit and present information to a user of one of the other computing devices 606.

Server computing device 630 may include one or more processors, memory, instructions, data, etc. These components operate in the same or similar fashion as those described above with respect to computing device 606.

According to some examples, the server computing device 630 may be connected over the network to a data center 610 housing any number of hardware accelerators. A hardware accelerator may include a series of processing units, such as graphic processing units. The processing units may perform data transfer between units using collective communications. Collective communication may be implemented in RoCEv2, where a sender 120 and a receiver 110 are connected via a network connection or QP 125. For the connection, a running value of outstanding bytes 305 on the connection or QP 125 is maintained. The outstanding bytes 305 provide insight into the amount of congestion on the connection 125. The number of outstanding bytes 305 may be interpreted as an estimate of the throughput on the connection. The hardware accelerator may include collective communication between processors having a sender 120 and a receiver 110 in communication via a queue pair 125. Each QP 125 may be associated with a number of remaining bytes 305 that is representative of congestion on the communication channel. Data for transmission may be selectively assigned to QPs having a minimum number of outstanding bytes, thereby providing congestion aware collective communications. The data center 610 can be one of multiple data centers or other facilities in which various types of computing devices, such as hardware accelerators, are located. Computing resources housed in the data center can be specified for repeated results monitoring, including identifying repeated query results, or the like.

The server computing device 630 can be configured to receive queries from the client computing device 606 on computing resources in the data center 610. For example, the environment can be part of a computing platform configured to provide a variety of services to users, through various user interfaces and/or application programming interfaces (APIs) exposing the platform services. The variety of services can include identifying content responsive to the query, determining whether query results are repeated query results, or the like. The client computing device 606 can transmit input data associated with a query. The server computing device 630 can receive the input data and, in response, identify and provide for output query results. When identifying the query results, the server computing device 630 can generate a signature for the query results. The generated signature may be compared to other signatures associated with the query results and/or historical query signatures. Based on the comparison, the server computing device 630 can determine whether the query results are repeated query results. In examples where the query results are repeated query results, the server computing device 630 can enable one or more preventative measures.

As other examples of potential services provided by a platform implementing the environment, the server computing device can maintain a variety of models in accordance with different constraints available at the data center. For example, the server computing device can maintain different families for deploying models on various types of TPUs and/or GPUs housed in the data center or otherwise available for processing.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a stand-alone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purposes logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system for collective communication in a computer network comprising:
a slicer module receiving a message containing a first amount of data, the slicer dividing the first amount of data into a plurality of quanta, each quanta containing a second smaller amount of data;
a scheduler module for selecting a network connection from a plurality of available network connections, comprising a sender and a receiver and scheduling a quantum on the selected network connection wherein the selection of the network connection is based on an estimation of a lowest congestion among the plurality of network connections.

2. The system of claim 1, wherein the slicer divides the first amount of data into a plurality of quanta each containing between 64 kilobytes (KB) of data and 512 KB of data.

3. The system of claim 1 or claim 2, wherein when a sender receives an acknowledgement from a receiver of a quanta transmitted on the selected network connection, mapping the acknowledgement to the selected network connection.

4. The system of one of claims 1 to 3, wherein the scheduler module for each quanta, iteratively checks each connection for a number of outstanding bytes associated with the network connection.

5. The system of claim 4, wherein the selected network connection is a network connection having the lowest number of outstanding bytes.

6. The system of claim 5, wherein the scheduler module schedules the current quanta on the network connection having the lowest number of outstanding bytes.

7. The system of claim 6, wherein on a condition that when iteratively checking each network connection, a network connection is determined to have zero outstanding bytes, the iterative checking is stopped, and the quanta is immediately scheduled to the network connection having zero outstanding bytes; and
optionally, wherein when acknowledgement is received on all connections sending the message, marking the message as complete.

8. The system of claim 6 or claim 7, comprising when scheduling a quanta to a selected connection, updating the outstanding byte count for the selected connection; and
optionally comprising when mapping the acknowledgement to the originating connection, adjusting the outstanding byte count of the originating connection.

9. The system of one of claims 6 to 8,
wherein when more than one quanta of the plurality of quanta are scheduled on single connection, the single connection transmits all of the more than one quanta in a single data transfer operation; and/or
wherein the scheduler module includes an immediate value with a remote direct memory access (RDMA) write operation, the immediate value including the number of connections that have quanta scheduled and an identifier of the message.

10. The system of one of claims 6 to 9, wherein on a condition that all quanta in the plurality of quanta are scheduled on a single connection, the scheduler module stores an identifier of the single connection in cache.

11. The system of one of claims 6 to 10, wherein the number of connections in the plurality of connections is not greater than eight; and
optionally, wherein when iteratively checking the plurality of connections, the scheduler module formats the number of outstanding bytes into an eight byte value and the eight byte values are cacheline aligned.

12. A method for transmitting data between graphic processing units (GPUs) comprising:
receiving a first amount of data to be transmitted as a message from a sender to a receiver;
in a slicer, dividing the first amount of data into a plurality of quanta containing a smaller amounts of data;
in a scheduler module, estimate an amount of congestion for a plurality of network connections between the sender and the receiver;
select one connection from the plurality of connections, the selected connection having a lowest estimate of congestion of the plurality of connections; and
scheduling a quanta on the selected connection.

13. The method of claim 12, further comprising:
in the sender transmitting the plurality of quanta from the corresponding selected connections; and
in the sender, receiving an acknowledgement from the receiver that the transmitted quanta were received; and
in the sender, adjusting the estimate of congestion for the selected connection for the received quanta.

14. A method for estimating congestion on a connection between a sender and a receiver for communication between graphics processing units (GPUs), comprising:
dividing a message having a first amount of data into a plurality of quanta having a smaller amount of data;
selecting a connection from a plurality of connections;
scheduling one of the quanta on the selected connection;
adding the amount of data in the quanta to an outstanding byte count for the selected connection.

15. The method of claim 14, further comprising:
upon receiving an acknowledgement that the quanta were received by the receiver, subtracting the amount of data contained in the quanta from the selected connection's outstanding byte count; and
optionally further comprising:
choosing the selected connection based on the selected connection's outstanding byte count as compared to an outstanding byte count of the other connections in the plurality of connections.
